# EUROPÄISCHE PATENTSCHRIFT

(11) **EP 1 929 172 B1**
(45) Veröffentlichungstag und Bekanntmachung des Hinweises auf die Patenterteilung: **03.04.2013**
(21) Anmeldenummer: 06793084.2
(22) Anmeldetag: 31.08.2006
(51) Int. Cl.: F16F 9/05

(54) **GASFEDERANORDNUNG**
GAS-FILLED SPRING ARRANGEMENT
ENSEMBLE RESSORT A GAZ

(30) Priorität: 24.09.2005 DE 102005045804
(43) Veröffentlichungstag der Anmeldung: 11.06.2008
(73) Patentinhaber: Continental Teves AG & Co. OHG, 60488 Frankfurt (DE)
(72) Erfinder: OLDENETTEL, Holger, 30900 Wedemark (DE)
(86) Internationale Anmeldenummer: PCT/EP2006/065840
(87) Internationale Veröffentlichungsnummer: WO 2007/033892

(56) Entgegenhaltungen:
- EP-A- 0 306 732
- EP-A- 1 416 187
- EP-A- 1 464 867
- DE-A1- 19 842 733
- DE-C1- 3 147 231
- GB-A- 2 005 799
- GB-A- 2 098 700

## Beschreibung

Die Erfindung betrifft eine Gasfederanordnung zum Abfedern eines gefederten Bauteils gegenüber einem ungefederten Bauteil gemäß dem Oberbegriff des Patentanspruchs 1.

Gasfederanordnungen, insbesondere Luftfederanordnungen werden zunehmend als teiltragende Systeme in Verbindung mit mechanischen Federn oder auch als volltragende Systeme im Automobilbau eingesetzt. Sie können zusätzlich zu ihren Federungsaufgaben auch Niveauregelaufgaben übernehmen, wenn der von einem Balg umschlossene Gasraum einen Gasanschluss für die geregelte Zuführung bzw. Abführung von Gas besitzt. Die vorliegende Erfindung wird im Folgenden am Beispiel einer Gasfederanordnung für Kraftfahrzeuge beschrieben, ist jedoch keineswegs darauf beschränkt.

Der Balg einer Gasfederanordnung der im Oberbegriff des Anspruchs 1 beschriebenen Art besteht üblicherweise aus einem gasundurchlässigen Gummimaterial bzw. gummiartigen Material, welches durch so genannte Cord-Einlagen verstärkt ist. Als Cordmaterial wird zunehmend Aramid eingesetzt, da mit anderen Materialien, wie etwa Polyamid, Polyester und dergleichen nicht der gewünschte Berstdruck erreicht werden kann. Da Aramid-Corde eine sehr hohe Steifigkeit aufweisen, besitzen mit einem Aramid-Balg ausgestattete Gasfedern eine entsprechend hohe Torsionssteifigkeit.

Abhängig von der jeweiligen Konstruktion der gefederten Achse eines Kraftfahrzeuges werden auf die Gasfeder außer der Einfederungsbewegung in Richtung der Balgachse auch Drehbewegungen um die Balgachse übertragen. Wenn die Kinematik der jeweiligen Achse eine solche Drehbewegung vorgibt, ergeben sich daraus für den Balg hohe Torsionsmomente, welche zum Ausfall des Balges führen können.

Um solche Torsionsmomente von den Gasfedern fern zu halten, ist es bereits bekannt, die gesamte Gasfeder beispielsweise über ein Kopflager elastisch zu lagern, so dass sie die eingeleitete Torsionsbewegung mitmachen kann, ohne dass der Balg durch Torsionsmomente belastet wird. Derartige Kopflager sind jedoch verhältnismäßig voluminös, so dass der benötigte Einbauraum für die Gasfeder in unerwünschter Weise vergrößert wird.

Es ist auch schon bekannt, das Deckelelement der Gasfeder über ein Gleitlager am zugeordneten Bauteil zu lagen, wodurch eine Einleitung von Torsionsbewegungen ebenfalls vermieden werden kann. Auch diese Lösung ist konstruktiv und baulich aufwendig und erfordert zusätzliche Warnung.

Vor diesem Hintergrund liegt der Erfindung die Aufgabe zugrunde, eine Gasfederanordnung der im Oberbegriff des Anspruchs 1 genannten Art zu schaffen, bei der auf konstruktiv einfache Weise der Balg im Wesentlichen von Torsionsmomenten entlastet ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass in einem radial einwärts verlaufenden Balgabschnitt bei allen Betriebsbedingungen verhältnisnmäßig geringe Zugspannungen herrschen, so dass dieser Balgabschnitt relativ elastisch ist und deshalb die engeleiteten Torsionsbewegungen aufnehmen kann.

Aus der US 2002/0041063 A1 ist bereits eine Gasfederanordnung der im Oberbegriff des Anspruchs 1 genannten Art bekannt, bei welcher der radial einwärts verlaufende Balgabschnitt ohne jede Abstützung ist, durch die gewährleistet wird, dass der radiale Verlauf dieses Balgabschnittes bei den unterschiedlichen Betriebsbedingungen erhalten und damit wirksam bleibt. Man muss vielmehr davon ausgehen, dass dieser Balgabschnitt bei der Einfederungsbewegung sich nach innen einstülpt und damit die oben beschriebene Funktion nicht mehr erfüllen kann.

Die Erfindung geht demnach aus von einer Gasfederanordnung zum Abfedern eines gefederten Bauteils gegenüber einem ungefederten Bauteil, umfassend einen schlauchförmigen Balg aus einem flexiblen Material, dessen eines Ende nach innen eingestülpt und mit einem in den Balg eintauchenden Kolbenelement verbunden ist, und dessen anderes Ende über einen vom Außenumfang des Balges aus im Wesentlichen quer zur Balglängsachse radial einwärts verlaufenden Balgabschnitt mittels einer Manschettenanordnung oder dergleichen mit einem Deckelelement verbunden ist. Eine solche Gasfederanordnung ist in der GB 2 005 799 A offenbart. Hier ist der einwärts verlaufende und mittels einer Manschettenanordnung oder dergleichen mit einem Deckelelement verbundene Balgabschnitt an einem die Manschettenanordnung umgebenden Stützring abgestützt, wobei letzterer allerdings nicht den Balg von Torsionsmomenten entlasten soll, sondern bei einem großen Höhen-Durchmesser-Verhältnis Instabilitäten vermeiden soll.

Zur Lösung der gestellten Aufgabe ist nun vorgesehen, dass der quer zur Balglängsachse verlaufende Balgabschnitt sich an einem die Manschettenanordnung umgebenden Stützring abstützt und dass der Stützring an dem Deckelelement um die Balglängsachse drehbar angeordnet ist.

Der an dem radial einwärts verlaufenden Balgabschnitt anliegende Stützring gewährleistet, dass der radial einwärts verlaufende Balgabschnitt diesen Verlauf bei allen Betriebsbedingungen beibehält, so dass er die oben beschriebene Aufgabe, die von der Achse eingeleitete Torsionsbewegung aufzunehmen, erfüllen kann. Bei dieser Torsionsbewegung wird der radial innere Bereich des Balgabschnittes von dem Deckelelement mitgenommen, während der radial äußere Bereich von dem schlauchartigen, torsionssteifen Teil des Balges festgehalten wird, so dass die Verdrehung von innen nach außen abnimmt, während der Drehbogen beim Deckelelement mit zunehmendem Radius zunimmt.

Die drehbare Lagerung des an dem radialen Balgabschnitt anliegenden Stützringes stellt dabei sicher, dass diese Torsionsbewegung nicht durch Reibung zwischen dem Stützring und dem Balgmaterial behindert wird.

In einer bevorzugten Ausführungsform der Ereindung ist vorgesehen, dass der Stützring über ein Wälzlager, beispielsweise einem Kugellager an dem Deckelelement gelagert ist. Kugellager in fast beliebiger Form und Größe stellen preiswerte und marktübliche Bauteile dar und sie gewährleisten eine sichere Lagerung bei geringem Lagerwiderstand.

Gemäß einer anderen Ausführungsform der Erfindung ist der Stützring über eine Gleitschalen-Lagerung an dem Deckelelement gelagert. Bei einer geeigneten Auswahl der Lagerpaarung lässt sich auch damit ein widerstandsarmes, wartungsfreies Lager mit einer langen Lebensdauer erzielen.

Da die zu erwartenden Torsionsbewegungen nur einen sehr kleinen Winkelbereich umfassen, kann es auch genügen, wenn gemäß einer weiteren Ausgestaltung der Erfindung der Stützring über einen elastischen Zwischenring an dem Deckelelement angeordnet ist. Dieser Zwischenring ist so ausgelegt, dass er eine Verdrehung des Deckelelementes gegenüber dem durch Reibung an dem radial verlaufenden Balgabschnitt gehaltenen Stützring im Wesentlichen ohne Drehmitnahme erlaubt, so dass zwischen Stützring und Balgabschnitt keine oder nur eine geringe Bewegungsreibung auftritt.

Manschettenanordnunaen zur Befestigung des Balges am Deckelelement umfassen im Allgemeinen einen metallischen Spannring, durch den das Ende des Balges am Deckelelement geklemmt wird. Bei einer derartigen konstruktiven Ausgestaltung ist vorgesehen, dass der Stützring auf diesem der Manschettenanordnung zugeordneten Spannring zentriert wird. Dabei sieht eine konstruktive Lösung vor, dass der Stützring selbst radial .innen an dem Spannring anliegt.

Wenn der Stützring in der oben beschriebenen Weise auf einem elastischen Zwischenring gelagert ist, besteht gemäß einer anderen konstruktiven Ausgestaltung der Erfindung auch die Möglichkeit, dass der elastische Zwischenring radial innen an dem Spannring anliegt, wodurch die aus dem Zwischenring und dem Stützring gebildete Baueinheit zentriert wird.

Um die Gasfederanordnung gegen Umwelteinflüsse, beispielsweise Verschmutzung zu schützen, ist diese vielfach vollständig von einem Faltenbalge umgeben. In diesem Fall ist gemäß einer weiteren Ausgestaltung der Erfindung vorgesehen, dass ein Ende des die Gasfederanordnung umgebenden Faltenbalges am Außenumfang des Stützringes befestigt ist. Da der Faltenbalg im Allgemeinen sehr elastisch ist, kann er auch eine gegebenenfalls über einen elastischen Zwischenring übertragende geringe Torsionsbewegung des Stützringes mitmachen, ohne dieser Torsionsbewegung einen ins Gewicht fallenden Widerstand entgegen zu setzen.

Um jedoch selbst einen derartigen Widerstand noch auszuschließen, ist gemäß einer weiteren Ausgestaltung der Erfindung an dem Ende des Faltenbalges ein Lagerring angeordnet, welcher drehbar am Außenumfang des Stützringes gelagert ist, so dass der Stützring seine geringe Torsionsbewegung ausführen kann, ohne den Faltenbalg mitzunehmen.

Um auch gegebenenfalls eine bei der Einfederungsbewegung von der Achse erzwungene Kippbewegung des Deckelelementes um eine zur Balglängsachse quer stehende Kippachse nicht durch den Faltenbalg, zu behindern, ist gemäß einer weiteren Ausgestaltung der Erfindung vorgesehen, dass an dem dem Deckelelement zugeordneten Ende des Faltenbalges ein Befestigungsring angeordnet ist, welcher über zwei um 180° in Umfangsrichtung versetzte Drehlager um eine Schwenkachse schwenkbar am Stützring gelagert ist.

Mehrere Ausführungsbeispiele der Erfindung sind in der Zeichnung dargestellt und im Folgenden näher beschrieben. Es zeigen
- Fig. 1: in einem Längsschnitt eine Gasfederanordnung mit einem kugelgelagerten Stützring,
- Fig. 2: eine Anordnung etwa gemäß der Fig. 1, jedoch mit einem auf einem elastischen Zwischenring gelagerten Stützring,
- Fig. 3: eine Anordnung etwa gemäß der Fig. 2, mit einem an der Manschettenanordnung zentrierten Stützring,
- Fig. 4: eine Anordnung etwa entsprechend den Figuren 2 und 3, mit einem an der Manschettenanordnung zentrierten elastischen Zwischenring und mit einem am Stützring befestigten Faltenbalg,
- Fig. 5: eine Anordnung etwa gemäß Fig. 4, wobei der Faltenbalg über ein Drehlager am Stützring gelagert ist, und
- Fig. 6: eine Anordnung etwa gemäß den Figuren 4 und 5, wobei der Faltenbalg um eine Schwenkachse schwenkbar am Deckelelement gelagert ist.

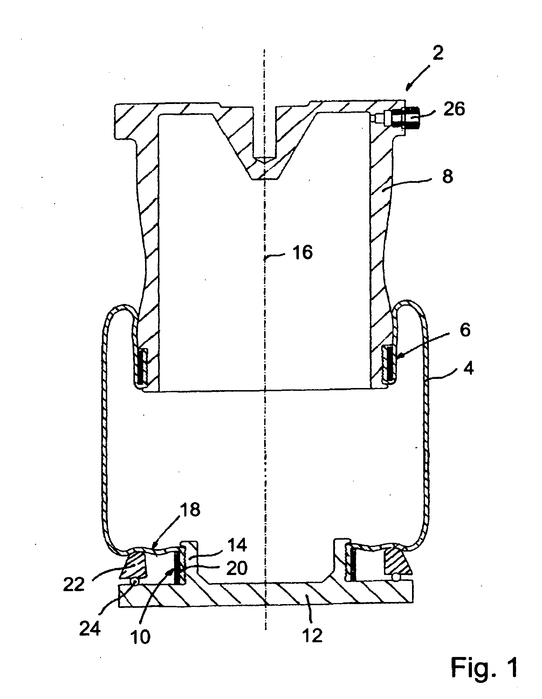

Die in Fig. 1 dargestellte Gasfederanordnung 2 umfasst einen schlauchförmigen Balg 4, dessen oberes Ende nach innen eingestülpt und über eine Manschettenanordnung 6 mit dem unteren Ende eines in den Balg 4 eintauchenden Kolbenelementes 8 gasdicht verbunden ist. Das andere, in Fig. 1 untere Ende des Balges 4 ist mittels einer Manschettenanordnung 10 mit einem an einem Deckelelement 12 ausgebildeten axialen Ringflansch 14 gasdicht befestigt.

Der Balg 4 weist an seinem unteren Ende einen vom Außenumfang des Balges aus im Wesentlichen quer zur Balglängsachse 16 radial einwärts verlaufenden Balgabschnitt 18, welcher in den von der Manschettenanordnung 10 eingespannten Endabschnitt 20 des Balges 4 übergeht.

Der Balg 4 besteht beispielsweise aus einem Gummimaterial bzw. einem gummiartigen Material, in das Verstärkungsfasern oder ein auch als Cord-Einlage bezeichnetes Verstärkungsgewebe, beispielsweise aus Aramid, eingebettet ist. Der radial einwärts verlaufende Balgabschnitt 18 ist bei allen Betriebsbedingungen der Gasfederanordnung im Wesentlichen kraftfrei, so dass der Balg 4 in diesem Bereich relativ elastisch ist und eine Drehung des Deckelelementes 12 um die Balglängsachse 16 aufnehmen kann.

Um den radial einwärts verlaufenden Balgabschnitt 18 abzustützen, also um zu verhindern, dass sich dieser Abschnitt bei einer Einfederungsbewegung wie im oberen Bereich des Balges 4 nach innen einstülpt, liegt dieser auf einem Stützring 22 auf. Der Stützring 22 stützt sich seinerseits auf dem Deckelelement 12 ab. Zwischen dem Deckelelement 12 und dem Stützring 22 ist eine Drehlagerung vorgesehen, so dass das Deckelelement 12 eine von der Achse eingeleitete Torsionsbewegung ausführen kann, ohne den Stützring 22 mitzunehmen. Auf diese Weise wird eine Reibung zwischen Stützring 22 und Balgabschnitt 18 verhindert. Die Drehlagerung zwischen dem Deckelelement 12 und dem Stützring 22 ist im Ausfühivngsbeispiel der Fig. 1 als Kugellager 24 ausgebildet.

Das Kugellager 24 kann durch ein Gleitlager mit einer geeigneten Lagerpaarung ersetzt werden, wie nicht im Einzelnen dargestellt zu werden braucht.

Wie die Fig. 1 erkennen lässt, ist an dem Kolbenelement 8 ein Leitungsanschluss 26 vorgesehen, welcher beispielsweise zum Zwecke einer Niveauregelung eine geregelte Zufuhr von Gas, im allgemeinen Luft, zu der Gasfederanordnung bzw. eine Abfuhr von Gas aus der Gasfederanordnung erlaubt.

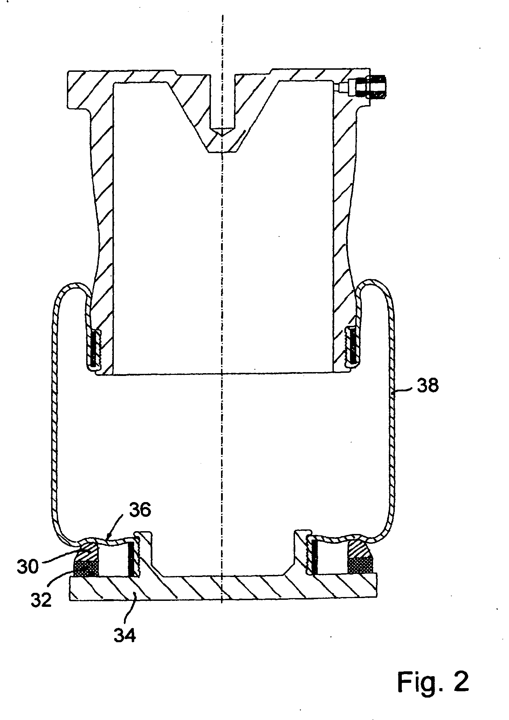

Fig. 2 zeigt eine Gasfederanordnung, die in ihrem wesentlichen Aufbau der Gasfederanordnung 2 der Fig. 1 entspricht und deshalb nicht nochmals im einzelnen beschrieben zu werden braucht. Im Unterschied zur Gasfederanordnung der Fig. 1 ist der Stützring 30 über einen elastischen Zwischenring 32 am Deckelelement 34 angeordnet, welcher eine Verdrehung des Deckelelementes 34 gegenüber dem an dem radial einwärts verlaufenden Balgabschnitt 36 des Balges 38 anliegenden Stützring 30 erlaubt.

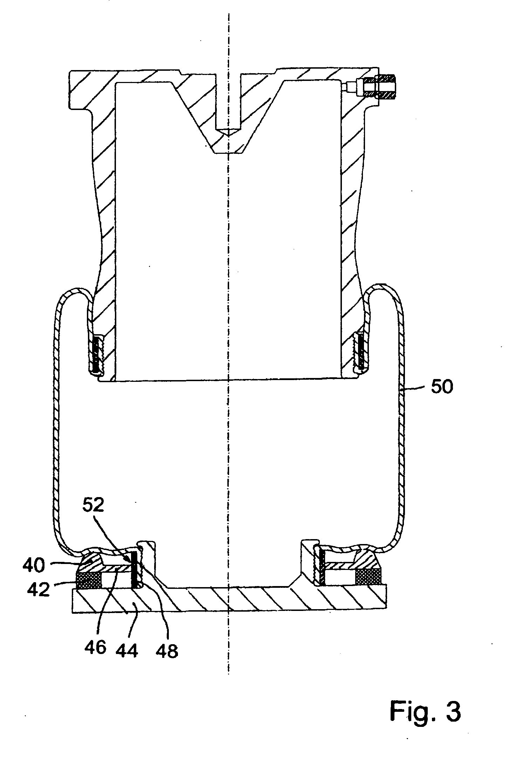

Fig. 3 zeigt eine Gasfederanordnung ähnlich den zuvor beschriebenen Gasfederanordnungen. Der Stützring 40 ist wiederum über einen elastischen Zwischenring 42 am Deckelelement 44 angeordnet. Um den Stützring 40 zu zentrieren, ist er mit einem radialen Innenflansch 46 ausgestattet, welcher radial innen an einem Spannring 48 anliegt, welcher in an sich bekannter Weise einen Bestandteil der den Balg 50 mit dem Deckelelement 44 verbindenden Manschettenanordnung 52 bildet.

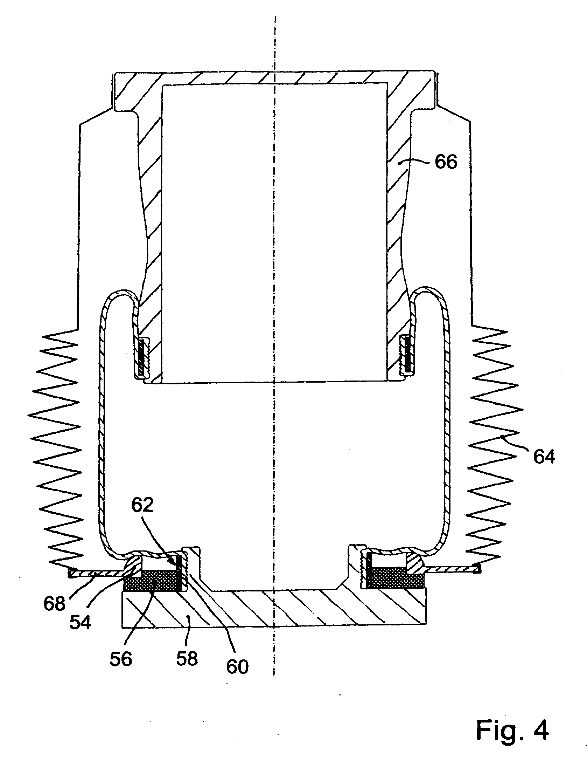

Fig. 4 zeigt eine Anordnung ähnlich der Fig. 3. Der Stützring 54 ist über einen elastischen Zwischenring 56 am Deckelelement 58 angeordnet. Im Unterschied zur Fig. 3 ist der Stützring 54 nicht direkt an dem Spannring 60 der Manschettenanordnung 62 zentriert, sondern über den Zwischenring 56, welcher radial innen am Spannring 60 anliegt.

Wie die Fig. 4 erkennen lässt, ist die gesamte Gasfederanordnung gegen Umwelteinflüsse, beispielsweise Verschmutzung, durch einen diese umgebenden Faltenbalg 64 geschützt. Das obere Ende des Faltenbalges 64 ist in beliebiger, geeigneter Weise an dem Kolbenelement 66 befestigt, und das untere Ende des Faltenbalges 64 ist an einem am Stützring 54 ausgebildeten radialen Außenflansch 68 befestigt. Da der Stützring 54 und damit der Außenflansch 68 durch den Zwischenring 56 von einer Torsionsbewegung des Deckelelementes 58 weitgehend abgekoppelt ist, wird auf den Faltenbalg 64 allenfalls eine geringe Torsionsbewegung übertragen, die er aufgrund seiner großen Flexibilität ohne weiteres aufnehmen kann.

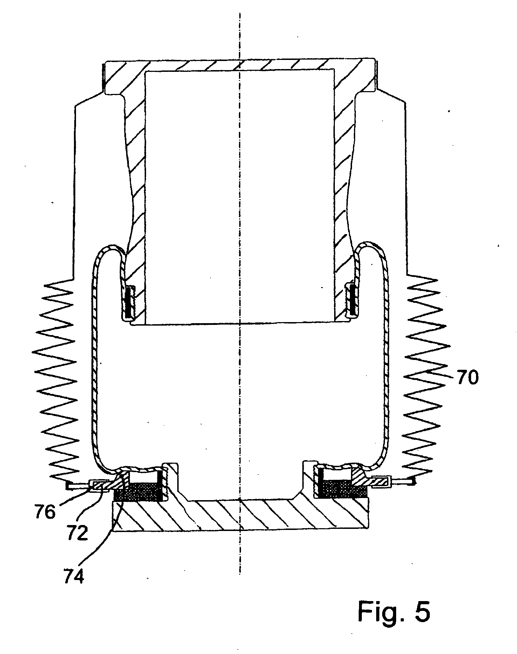

Fig. 5 zeigt eine Anordnung ähnlich der Fig. 4. Im Unterschied dazu ist jedoch bei dieser Ausführungsform der Faltenbalg 70 nicht direkt an einem Außenflansch 72 des Stützringes 74 angeordnet, sondern über einen am Ende des Faltenbalges angeordneten Lagerring 76, welcher drehbar an dem Außenflansch 72 des Stützringes 74 gelagert ist. Auf diese Weise wird auch eine gegebenenfalls sich einstellende geringe Torsionsbewegung des Stützringes 74 nicht auf den Faltenbalg 70 übertragen.

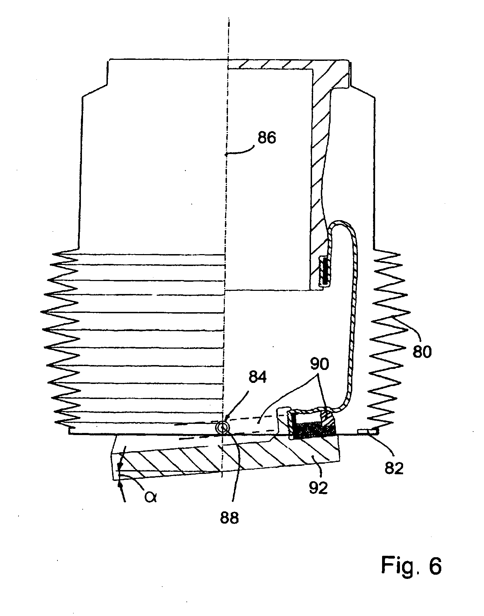

Je nach der konstruktiven Ausgestaltung der Achse kann auf das Deckelelement auch eine Kippbewegung um eine Kippachse übertragen werden. Um bei einer Ausführungsform mit einem die Gasfederanordnung umgebenden, schützenden Faltenbalg eine solche Kippbewegung vom Faltenbalg fernzuhalten, ist die in Fig. 6 dargestellte Ausführungsform vorgesehen, Dabei ist an dem in Fig. 6 unteren Ende des Faltenbalges 80 ein Befestigungsring 82 vorgesehen, welcher über zwei um 180° im Umfangsring versetzte Drehlager (von denen in Fig. 6 nur ein Drehlager 84 zu sehen ist) um eine zur Balglängsachse 86 rechtwinklige Schwenkachse 88 schwenkbar am Stützring 90 gelagert. Auf diese Weise kann das Deckelelement 92 mit dem daran angeordneten Stützring 90 beispielsweise entsprechend einem Kippwinkel α geschwenkt werden, ohne dass diese Kippbewegung auf den Faltenbalg 80 übertragen wird.

### Bezugszeichenliste

- 2: Gasfederanordnung
- 4: Balg
- 6: Manschettenanordnung
- 8: Kolbenelement
- 10: Manschettenanordnung
- 12: Deckelelement
- 14: Ringflansch
- 16: Balglängsachse
- 18: Balgabschnitt
- 20: Endabschnitt
- 22: Stützring
- 24: Wälzlager, Kugellager
- 26: Leitungsanschluss
- 30: Stützring
- 32: Zwischenring
- 34: Deckelelement
- 36: Abschnitt
- 38: Balg
- 40: Stützring
- 42: Zwischenring
- 44: Deckelelement
- 46: Innenflansch
- 48: Spannring
- 50: Balg
- 52: Manschettenanordnung
- 54: Stützring
- 56: Zwischenring
- 58: Deckelelement
- 60: Spannring
- 62: Manschettenanordnung
- 64: Faltenbalg
- 66: Kolbenelement
- 68: Außenflansch
- 70: Faltenbalge
- 72: Außenflansch
- 74: Stützung
- 76: Lagerung
- 80: Faltenbalg
- 82: Befestigungsring
- 84: Drehlager
- 86: Balglängsachse
- 88: Drehlager
- 90: Stützring
- 92: Deckelelement
- α: Kippwinkel

## Patentansprüche

1. Gasfederanordnung (2) zum Abfedern eines gefederten Bauteils gegenüber einem ungefederten Bauteil, umfassend einen schlauchförmigen Balg (4) aus einem flexiblen Material, dessen eines Ende nach innen eingestülpt und mit einem in den Balg eintauchenden Kolbenelement (8) verbunden ist, und dessen anderes Ende über einen vom Außenumfang des Balges aus im Wesentlichen quer zur Balglängsachse radial einwärts verlaufenden Balgabschnitt (18) mittels einer Manschettenanordnung (10) oder dergleichen mit einem Deckelelement (12) verbunden ist, wobei der quer zur Balglängsachse (16) verlaufende Balgabschnitt (18) sich an einem die Manschettenanordnung (10) umgebenden Stützring (22) abstützt, **dadurch gekennzeichnet, dass** der Stützring (22) an dem Deckelelement (12) um die Balglängsachse (16) drehbar angeordnet ist.

2. Gasfederanordnung nach Anspruch 1, **dadurch gekennzeichnet, dass** der Stützring (22) über ein Wälzlager (24) an dem Deckelelement (12) gelagert ist.

3. Gasfederanordnung nach Anspruch 1, **dadurch gekennzeichnet, dass** der Stützring über eine Gleitschalen-Lagerung an dem Deckelelement (12) gelagert ist.

4. Gasfederanordnung nach Anspruch 1, **dadurch gekennzeichnet, dass** der Stützring (30) über einen elastischen Zwischenring (32) an dem Deckelelement (34) angeordnet ist.

5. Gasfederanordnung nach Anspruch 1, **dadurch gekennzeichnet, dass** der Stützring (40) an einem der Manschettenanordnung (52) zugeordneten Spannring (48) zentriert ist.

6. Gasfederanordnung nach Anspruch 5, **dadurch gekennzeichnet, dass** der Stützring (40) radial innen an dem Spannring (48) anliegt.

7. Gasfederanordnung nach Anspruch 4 und 5, **dadurch gekennzeichnet, dass** der elastische Zwischenring (56) radial innen an dem Spannring (60) anliegt.

8. Gasfederanordnung nach zumindest einem der Ansprüche 1 bis 7, **dadurch gekennzeichnet, dass** am Außenumfang des Stützringes (54) ein Ende eines die Gasfederanordnung umgebenden Faltenbalges (64) befestigt ist.

9. Gasfederanordnung nach Anspruch 8, **dadurch gekennzeichnet, dass** an dem Ende des Faltenbalges (70) ein Lagerring (76) angeordnet ist, welcher drehbar am Außenumfang des Stützringes (74) gelagert ist.

10. Gasfederanordnung nach Anspruch 8, **dadurch gekennzeichnet, dass** an dem Ende des Faltenbalges (80) ein Befestigungsring (82) angeordnet ist, welcher über zwei um 180° in Umfangsrichtung versetzte Schwenklager (84) um eine zur Balglängsachse (86) rechtwinklige Schwenkachse (88) schwenkbar am Stützring (90) gelagert ist.

## Claims

1. Gas-filled spring arrangement (2) for the cushioning of a sprung component with respect to an unsprung component, comprising a tubular concertina (4) made from a flexible material, one end of which is turned to the inside and connected to a piston element (8) penetrating into the concertina and the other end of which is connected to a cover element (12) by means of a cuff arrangement (10) or the like via a concertina portion (18) running from the outer circumference of the concertina essentially transversely to the concertina longitudinal axis radially inwards, the concertina portion (18) which runs transversely to the concertina longitudinal axis (16) being supported on a supporting ring (22) surrounding the cuff arrangement (10), **characterized in that** the supporting ring (22) is arranged on the cover element (12) rotatably about the concertina longitudinal axis (16).

2. Gas-filled spring arrangement according to Claim 1, **characterized in that** the supporting ring (22) is mounted on the cover element (12) via a rolling bearing (24).

3. Gas-filled spring arrangement according to Claim 1, **characterized in that** the supporting ring is mounted on the cover element (12) via a sliding-form mounting.

4. Gas-filled spring arrangement according to Claim 1, **characterized in that** the supporting ring (30) is arranged on the cover element (34) via an elastic intermediate ring (32).

5. Gas-filled spring arrangement according to Claim 1, **characterized in that** the supporting ring (40) is centred on a tension ring (48) assigned to the cuff arrangement (52).

6. Gas-filled spring arrangement according to Claim 5, **characterized in that** the supporting ring (40) bears against the tension ring (48) radially on the inside.

7. Gas-filled spring arrangement according to Claims 4 and 5, **characterized in that** the elastic intermediate ring (56) bears against the tension ring (60) radially on the inside.

8. Gas-filled spring arrangement according to at least one of Claims 1 to 7, **characterized in that** one end of a bellows (64) surrounding the gas-filled spring arrangement is fastened to the outer circumference of the supporting ring (54).

9. Gas-filled spring arrangement according to Claim 8, **characterized in that** a bearing ring (76) which is mounted rotatably on the outer circumference of the supporting ring (74) is arranged at the end of the bellows (70).

10. Gas-filled spring arrangement according to Claim 8, **characterized in that** there is arranged at the end of the bellows (80) a fastening ring (82) which is mounted on the supporting ring (90) pivotably about a pivot axis (88) at right angles to the concertina longitudinal axis (86) via two pivot bearings (84) offset by 180° in the circumferential direction.

## Revendications

1. Ensemble ressort à gaz (2) pour la suspension d'un composant suspendu par rapport à un composant non suspendu, comportant un soufflet tubulaire (4) en un matériau flexible, dont l'une des extrémités est recourbée vers l'intérieur et est reliée à un élément de piston (8) plongeant dans le soufflet, et dont l'autre extrémité est reliée à un élément de couvercle (12) au moyen d'un ensemble de manchon (10) ou similaire, par l'intermédiaire d'une section de soufflet (18) s'étendant radialement vers l'intérieur à partir de la périphérie extérieure, essentiellement transversalement par rapport à l'axe longitudinal de soufflet, la section de soufflet (18) s'étendant transversalement par rapport à l'axe longitudinal de soufflet (16) s'appuyant contre une bague d'appui (22) entourant l'ensemble de manchon (10), **caractérisé en ce que** la bague d'appui (22) est disposée sur l'élément de couvercle (12) de manière à pouvoir tourner autour de l'axe longitudinal de soufflet (16).

2. Ensemble ressort à gaz selon la revendication 1, **caractérisé en ce que** la bague d'appui (22) est montée sur l'élément de couvercle (12) au moyen d'un palier à roulement (24).

3. Ensemble ressort à gaz selon la revendication 1, **caractérisé en ce que** la bague d'appui est montée sur l'élément de couvercle (12) au moyen d'un palier à coquilles lisses.

4. Ensemble ressort à gaz selon la revendication 1, **caractérisé en ce que** la bague d'appui (30) est disposée sur l'élément de couvercle (34) par l'intermédiaire d'une bague intermédiaire élastique (32).

5. Ensemble ressort à gaz selon la revendication 1, **caractérisé en ce que** la bague d'appui (40) est centrée sur une bague de serrage (48) associée à l'ensemble de manchon (52).

6. Ensemble ressort à gaz selon la revendication 5, **caractérisé en ce que** la bague d'appui (40) s'applique radialement à l'intérieur contre la bague de serrage (48).

7. Ensemble ressort à gaz selon les revendications 4 et 5, **caractérisé en ce que** la bague intermédiaire élastique (56) s'applique radialement à l'intérieur contre la bague de serrage (60).

8. Ensemble ressort à gaz selon au moins l'une quelconque des revendications 1 à 7, **caractérisé en ce qu'**une extrémité d'un soufflet (64) entourant l'ensemble ressort à gaz est fixée à la périphérie extérieure de la bague d'appui (54).

9. Ensemble ressort à gaz selon la revendication 8, **caractérisé en ce qu'**une bague de palier (76) est disposée sur l'extrémité du soufflet (70), laquelle bague de palier est montée à rotation sur la périphérie extérieure de la bague d'appui (74).

10. Ensemble ressort à gaz selon la revendication 8, **caractérisé en ce qu'**une bague de fixation (82) est disposée à l'extrémité du soufflet (80), laquelle bague de fixation est montée sur la bague d'appui (90) de manière à pouvoir pivoter autour d'un axe de pivotement (88) perpendiculaire à l'axe longitudinal de soufflet (86), au moyen de deux paliers de pivotement (84) décalés de 180° dans la direction périphérique.
